# EUROPÄISCHE PATENTSCHRIFT

(11) **EP 0 974 019 B1**
(45) Veröffentlichungstag und Bekanntmachung des Hinweises auf die Patenterteilung: **10.07.2002**
(21) Anmeldenummer: 98922645.1
(22) Anmeldetag: 04.04.1998
(51) Int. Cl.: F16H 61/16, F16H 61/02

(54) **ERHÖHUNG DER SPONTANITÄT EINES AUTOMATGETRIEBES**
INCREASED-SPONTANEITY AUTOMATIC GEAR BOX
ACCROISSEMENT DE LA SPONTANEITE D'UNE TRANSMISSION AUTOMATIQUE

(30) Priorität: 10.04.1997 DE 19714853
(43) Veröffentlichungstag der Anmeldung: 26.01.2000
(73) Patentinhaber: ZF FRIEDRICHSHAFEN Aktiengesellschaft, 88038 Friedrichshafen (DE)
(72) Erfinder: POPP, Christian, D-88079 Kressbronn (DE); TENBROCK, Friedrich, D-88085 Langenargen (DE); ROSI, Hans-Jörg, D-88074 Meckenbeuren (DE)
(86) Internationale Anmeldenummer: EP9801978
(87) Internationale Veröffentlichungsnummer: WO9845627

(56) Entgegenhaltungen:
- EP-A- 0 341 631
- EP-A- 0 640 779
- US-A- 5 285 880
- US-A- 5 505 100

## Beschreibung

Die Erfindung betrifft ein Verfahren zur Durchführung von Überschneidungsschaltungen eines elektro-hydraulisch gesteuerten Automatgetriebes nach dem Oberbegriff des Hauptanspruchs.

Bei Automatgetrieben können die Schaltungen als Überschneidungsschaltungen, d. h., während eine erste Kupplung öffnet, schließt eine zweite Kupplung, ausgeführt sein. Der Druckverlauf der an der Schaltung beteiligten Kupplungen wird über elektromagnetische Stellglieder von einer elektronischen Getriebesteuerung bestimmt. Ein derartiges Steuerungs- und Regelverfahren ist z. B. aus der DE-OS 42 40 621 bekannt.

Üblicherweise werden Schaltungen des Automatgetriebes ausgelöst, wenn ein von einem Fahrer vorgebbarer Leistungswunsch, z. B. Drosselklappenstellung, eine Hochschalt- bzw. Rückschaltkennlinie eines Schaltkennfeldes überschreitet. Neben diesen mittels Fahrpedal ausgelösten Schaltungen hat ein Fahrer auch die Möglichkeit, zu jedem beliebigen Zeitpunkt manuelle Schaltungen auszulösen. So zeigt z. B. die DE-OS 43 11 886 eine Vorrichtung, durch die ein Fahrer mittels eines Wählhebels mit einer manuellen Gasse bzw. Schaltwippen am Lenkrad Schaltungen auslösen kann. In der Praxis tritt nun insbesondere bei. Rückschaltung mit einer anschließenden Hochschaltung das Problem auf, daß zwischen Leistungswunsch des Fahrers und entsprechendem Beschleunigungsvermögen über die eingestellte Übersetzungsstufe des Automatgetriebes eine starke Abweichung auftritt. Ein typisches Beispiel aus der Praxis hierfür ist, wenn ein Fahrer beabsichtigt, ein weiteres Fahrzeug zu überholen. Zu Beginn des Überholvorganges wird er das Fahrpedal betätigen, so daß das Automatgetriebe eine Rückschaltung ausführt. Erkennt nun der Fahrer, daß er den Überholvorgang aufgrund des Gegenverkehrs abbrechen muß, so wird er das Fahrpedal freigeben. Das Automatgetriebe wird zuerst die Rückschaltung vollständig ausführen, dann vergeht eine Sperrzeit und erst dann erfolgt die Hochschaltung. Dieser zeitliche Versatz zwischen Leistungswunsch des Fahrers und Reaktion des Automatgetriebes hierauf wird von einem Fahrer als unangenehm empfunden.

In der gattungsgemäßen EP 0 341 631 A2 ist ein Verfahren zur Durchführung von Überschneidungsschaltungen bekanntgeworden, bei dem eine Rückschaltung von einer ersten in eine zweite Übersetzungsstufe nicht vollständig beendet wird und ein Wechsel zu einer Hochschaltung zurück in die erste Übersetzungsstufe durchgeführt wird, wenn ein Abbruchkriterium erkannt wird. Dieses Abbruchkriterium kann eine manuelle Schaltung oder ein über Gaspedal angeforderter, negativer Lastwechsel sein.

Die der Erfindung zugrunde liegende Aufgabe besteht nun darin, ein Verfahren zur Durchführung von Überschneidungsschaltungen bei einem elektro-hydraulisch gesteuerten Automatgetriebe anzugeben, bei dem die Spontanität des Automatgetriebes verbessert ist.

Die Aufgabe wird erfindungsgemäß gelöst, indem während einer Rückschaltung von einer ersten in eine zweite Übersetzungsstufe diese verzögerungsfrei abgebrochen wird und verzögerungsfrei ein Wechsel zu einer Hochschaltung in die erste Übersetzungsstufe erfolgt, wenn ein Abbruchkriterium erkannt wird. Das Abbruchkriterium liegt mit Erkennen einer von einem Fahrer vorgebbaren Anforderung zu einer Hochschaltung vor.

Die erfindungsgemäße Lösung bietet den Vorteil, daß für den zuvor beschriebenen Fall aus der Praxis das tatsächliche Verhalten des Getriebes enger an. den Leistungswunsch des Fahrers gekoppelt ist. Die Rückschaltung wird nicht vollständig ausgeführt, sondern wird unmittelbar, nachdem der Fahrer über sein Verhalten dies signalisiert, abgebrochen. Gegenüber dem Stand der Technik wirkt das Automatgetriebes somit spontaner.

In einer Ausgestaltung der Erfindung wird vorgeschlagen, daß während der Rückschaltung von der ersten in die zweite Übersetzungsstufe bei Erfülltsein des Abbruchkriteriums zusätzlich eine Zulässigkeit geprüft wird. Die Zulässigkeit ist dann erfüllt, wenn sich der aktuelle Getriebeeingangsdrehzahlwert innerhalb eines Drehzahlbereiches befinden. Der Drehzahlbereich wird hierbei über einen ersten und einen zweiten Grenzwert definiert, wobei der erste Grenzwert eine Funktion des Synchrondrehzahlwertes der ersten Übersetzungsstufe bzw. der zweite Grenzwert eine Funktion des Synchrondrehzahlwertes der zweiten Übersetzungsstufe darstellt. In einer weiteren Ausgestaltung wird vorgeschlagen, daß zusätzlich geprüft wird, ob der Verlauf des Gradienten der Getriebeeingangsdrehzahl innerhalb eines vorgegebenen Drehzahlbandes liegt.

Diese beiden erfindungsgemäßen Ausgestaltungen bieten den Vorteil, daß zusätzlich geprüft wird, ob der Ablauf der Schaltung stabil ist. Sicherheitskritische Zwischenzustände werden somit rechtzeitig dedektiert.

In einer weiteren Ausgestaltung wird vorgeschlagen, daß bei Ausgabe des Schaltbefehls für die erste Kupplung eine Zeitstufe gestartet wird. Diese Zeitstufe läuft bis zu einer maximalen Zeit, wobei jedem Wert der Zeitstufe eine Reduktionszeit zugeordnet ist. In Ausgestaltung hierzu wird vorgeschlagen, daß eine Schnellfüllzeit der bei der Hochschaltung jetzt wieder zuschaltenden ersten Kupplung in Abhängigkeit der Reduktionszeit verändert wird. Durch diese Ausgestaltungen wird dem Umstand Rechnung getragen, daß bei einer schnellen Abfolge einer Rückschaltung mit anschließender Hochschaltung die abschaltende bzw. bei der Hochschaltung wieder zuschaltende erste Kupplung noch teilweise gefüllt ist. Über die variable Schnellfüllzeit wird somit erreicht, daß die eben nur teilweise entleerte erste Kupplung bei der Hochschaltung ohne Schaltruck komfortabel schließt.

In den Zeichnungen ist ein bevorzugtes Ausführungsbeispiel dargestellt.
Es zeigen:
- Fig. 1: ein System-Schaubild;
- Fig. 2: eine Tabelle der Kupplungslogik;
- Fig. 3: ein Zeit-Diagramm für ein erstes Beispiel und
- Fig. 4: ein Zeit-Diagramm für ein zweites Beispiel.

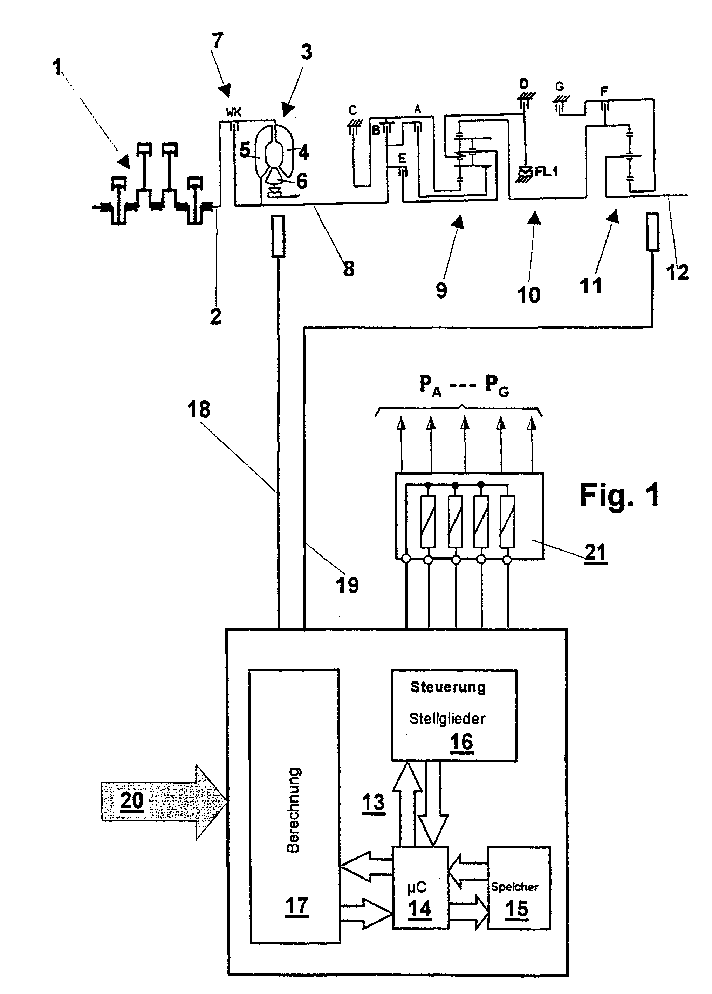

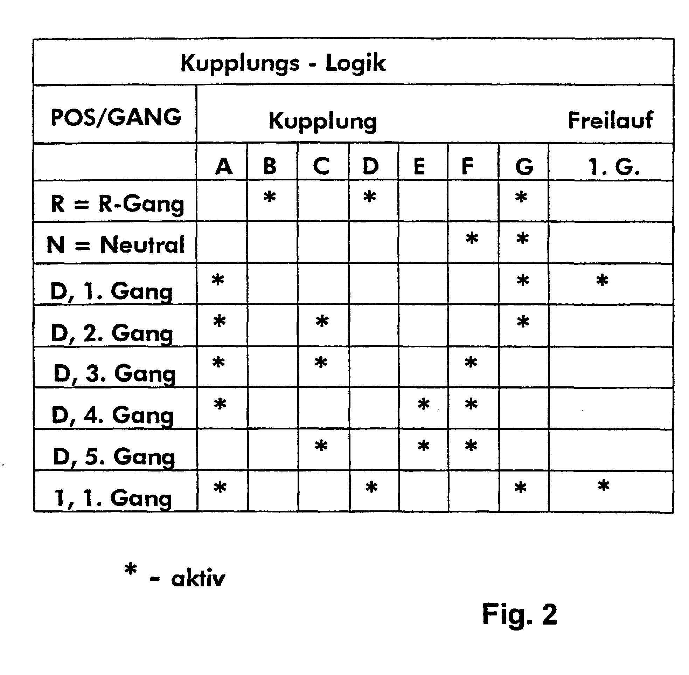

Fig. 1 zeigt ein System-Schaubild eines Automatgetriebes. Dieses besteht aus dem eigentlichen mechanischen Teil, einem hydrodynamischen Wandler 3, einem hydraulischen Steuergerät 21 und einer elektronischen Getriebesteuerung 13. Angetrieben wird das Automatgetriebe von einer Antriebseinheit 1, vorzugsweise Brennkraftmaschine, über eine Antriebswelle 2. Dieses ist mit dem Pumpenrad 4 des hydrodynamischen Wandlers 3 drehfest verbunden. Bekanntermaßen besteht der hydrodynamische Wandler 3 aus einem Pumpenrad 4, einem Turbinenrad 5 und einem Leitrad 6. Parallel zum hydrodynamischen Wandler 3 ist eine Wandlerkupplung 7 angeordnet. Die Wandlerkupplung 7 und das Turbinenrad 5 führen auf eine Turbinenwelle 8. Bei betätigter Wandlerkupplung 7 hat die Turbinenwelle 8 die gleiche Drehzahl wie die Antriebswelle 2. Der mechanische Teil des Automatgetriebes besteht aus Kupplungen und Bremsen A bis G, einem Freilauf 10 (FL1), einem Ravigneaux-Satz 9 und einem nachgeordneten Planetenradsatz 11. Der Abtrieb geschieht über eine Getriebeausgangswelle 12. Diese führt auf ein nicht dargestelltes Differential, welches über zwei Achshalbwellen die Antriebsräder eines nicht dargestellten Fahrzeuges antreiben. Über eine entsprechende Kupplungs-/Brems-Kombination wird eine Gangstufe festgelegt. Die Zuordnung der Kupplungslogik zur Gangstufe ist aus der Fig. 2 ersichtlich. So wird z. B. bei einer Rückschaltung aus dem vierten in den dritten Gang die Bremse C geschlossen und die Kupplung E deaktiviert. Wie weiter aus der Tabelle 2 ersichtlich ist, sind die Schaltungen von der zweiten bis zur fünften Übersetzungsstufe jeweils als Überschneidungsschaltungen ausgeführt. Da der mechanische Teil für das weitere Verständnis der Erfindung nicht relevant ist, wird auf eine detaillierte Beschreibung verzichtet.

Die elektronische Getriebesteuerung 13 wählt in Abhängigkeit der Eingangsgrößen 18 bis 20 eine entprechende Fahrstufe aus. Über das hydraulische Steuergerät 21, in dem sich elektro-magnetische Stellglieder befinden, aktiviert sodann die elektronische Getriebesteuerung 13 eine entsprechende Kupplungs-/Brems-Kombination. Während der Schaltübergänge bestimmt die elektronische Getriebesteuerung 13 den Druckverlauf der an der Schaltung beteiligten Kupplungen/Bremsen. Von der elektronischen Getriebesteuerung 13 sind in stark vereinfachter Form als Blöcke dargestellt: Micro-Controller 14, Speicher 15, Funktionsblock Steuerung Stellglieder 16 und Funktionsblock Berechnung 17. Im Speicher 15 sind die getrieberelevanten Daten abgelegt. Getrieberelevante Daten sind z. B. Programme und fahrzeugspezifische Kennwerte als auch Diagnosedaten. Üblicherweise ist der Speicher 15 als EPROM, EEPROM oder als gepufferter RAM ausgeführt. Im Funktionsblock Berechnung 17 werden die für einen Schaltungsverlauf relevanten Daten berechnet. Der Funktionsblock Steuerung Stellglieder 16 dient der Ansteuerung der sich im hydraulischen Steuergerät 21 befindenden Stellglieder.
Der elektronischen Getriebesteuerung 13 werden Eingangsgrößen 20 zugeführt. Eingangsgrößen 20 sind z. B. eine den Leistungswunsch des Fahrers repräsentierende Größe, wie etwa die Fahrpedal-/Drosselklappenstellung oder manuelle Schaltungsanforderungen, das Signal des von der Brennkraftmaschine abgegebenen Moments, die Drehzahl bzw. Temperatur der Brennkraftmaschine usw. Üblicherweise werden die Brennkraftmaschinen-spezifischen Daten von einem Motorsteuergerät bereitstellt. Dieses ist in Fig. 1 nicht dargestellt. Als weitere Eingangsgrößen erhält die elektronische Getriebesteuerung 13 die Drehzahl der Turbinenwelle 18 und der Getriebeausgangswelle 19.

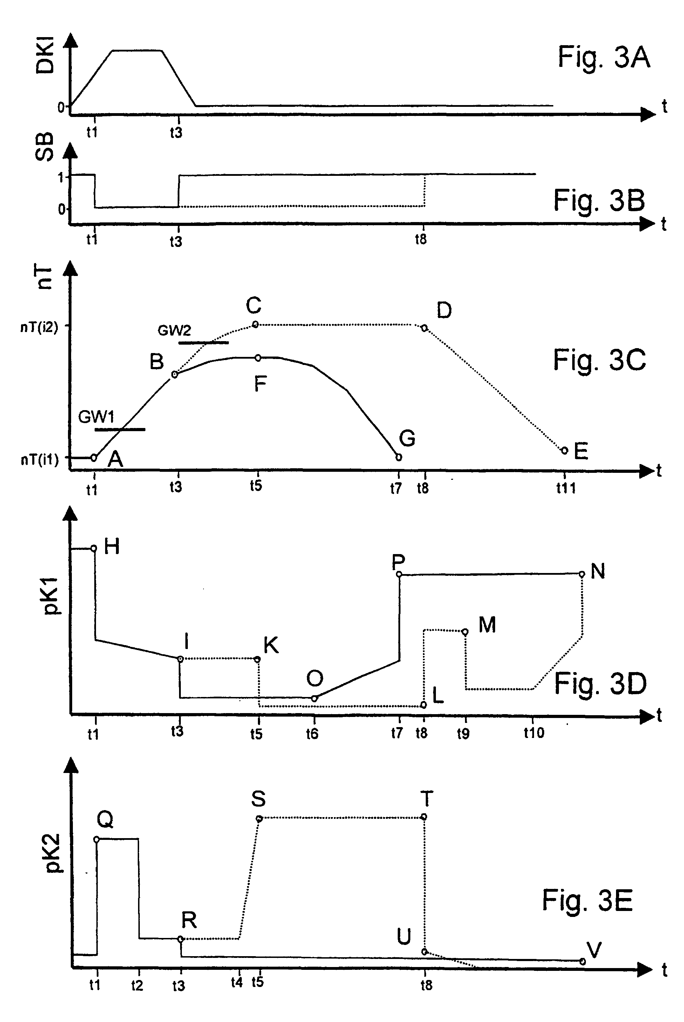

Fig. 3 besteht aus den Teil-Fig. 3A bis 3E. Dargestellt ist eine Rückschaltung im Zug, gefolgt von einer Hochschaltung im Schub. Die Unterscheidung Zug/Schub wird üblicherweise anhand eines Kennfeldes getroffen, wie es z. B. aus der DE-OS 44 17 477 bekannt ist oder anhand des Getriebeeingangsmomentes. Die Fig. 3A bis 3E zeigen jeweils über der Zeit: die den Leistungswunsch des Fahrers repräsentierende Größe DKI, Schaltbefehl SB, Getriebeeingangsdrehzahlverlauf nT, Druckverlauf der ersten Kupplung pK1 und Druckverlauf der zweiten Kupplung pK2. Die den Fahrerwunsch repräsentierende Größe DKI kann z. B. aus dem Fahrpedalwert, Drosselklappenwert oder aus manuell angeforderten Rückschaltungen, z. B. mittels Wählhebel oder Schaltwippe, bestimmt werden.

In den Fig. 3B bis 3E sind jeweils zwei Fallbeispiele dargestellt, wobei die zeitlichen Verläufe gemäß dem Stand der Technik als gestrichelte Linien und die Verläufe gemäß der Erfindung als durchgezogene Linien dargestellt sind. Der Verlauf gemäß dem Stand der Technik entspricht in Fig. 3C dem Kurvenzug mit den Punkten A, B, C, D und E. In Fig. 3D entspricht der Verlauf gemäß dem Stand der Technik dem Kurvenzug mit den Punkten H, K, L, M und N. In Fig. 3E entspricht der Verlauf gemäß dem Stand der Technik dem Kurvenzug mit den Punkten Q, R, S, T und U.
In Fig. 3C ist eine Lösung gemäß der Erfindung mit dem Kurvenzug und den Punkten A, B, F und G dargestellt. In der Fig. 3D ist ein Kurvenzug gemäß der Erfindung mit den Punkten H, I, O, P und N dargestellt. In Fig. 3E ist ein Kurvenzug gemäß der Erfindung mit den Punkten Q, R und V dargestellt.

Bei der Erläuterung der beiden folgenden Beispiele wird davon ausgegangen, daß ein Fahrer hinter einem zweiten Fahrzeug fährt und beabsichtigt, dieses zu überholen. Der Fahrer wird den Überholvorgang einleiten, indem er z. B. das Fahrpedal sehr stark betätigt. Es wird davon ausgegangen, daß der Leistungswunsch des Fahrers eine Rückschaltkennlinie überschreitet, so daß das Automatgetriebe eine Rückschaltung, z. B. vom fünften in den vierten Gang, ausführt. Erkennt nun der Fahrer, daß er zuerst den Gegenverkehr passieren lassen muß, so wird er unmittelbar das Fahrpedal freigeben. Als Reaktion hierauf wird eine Hochschaltung von der vierten in die fünfte Übersetzungsstufe ausgeführt.

Im ersten Beispiel wird ein Verlauf gemäß dem Stand der Technik beschrieben. Zum Zeitpunkt t1 leitet der Fahrer den Überholvorgang ein. In Fig. 3A überschreitet der DKI-Wert den Wert einer Rückschaltkennlinie. Als Folge hierauf wird die elektronische Getriebesteuerung einen Rückschaltbefehl ausgeben, d. h. in Fig. 3B ändert sich der Signalpegel von Eins nach Null. Durch Ausgabe des Schaltbefehls wird das Druckniveau der ersten Kupplung pK1 von einem ersten, entsprechend dem Punkt H, auf ein zweites Niveau reduziert. Hierdurch verändert sich der Verlauf der Getriebeeingangsdrehzahl nT im Punkt A. Ebenfalls zum Zeitpunkt t1 wird die zweite Kupplung mit einem Schnellfülldruck, das Druckniveau entspricht hierbei dem Punkt Q, bis zum Zeitpunkt t2 beaufschlagt. Im Zeitraum t2 bis t3 läuft die Füllausgleichsphase der zweiten Kupplung K2. Zum Zeitpunkt t3 unterschreitet der DKI-Wert die Hochschaltkennlinie. Gemäß dem Stand der Technik wird aber zuerst die Rückschaltung vollständig beendet. Zum Zeitpunkt t4 wird das Druckniveau der zweiten Kupplung bis zum Zeitpunkt t5 erhöht, Druckniveau entsprechend dem Punkt S. Zum Zeitpunkt t5 erreicht die Getriebeeingangsdrehzahl nT den Synchrondrehzahlwert nT(i2) der zweiten Übersetzungsstufe i2. Dies entspricht in Fig. 3C dem Punkt C. Die Rückschaltung von der ersten in die zweite Übersetzungsstufe ist somit beendet. Danach folgt im Zeitraum t5 bis t8 eine Sperrzeit. Die Sperrzeit ist deswegen notwendig, weil gewährleistet sein muß, daß die beim Rückschaltvorgang abschaltende erste Kupplung K1 vollständig entleert ist. Ist dies nicht der Fall, so macht sich die Schnellfüllung der bei der Hochschaltung jetzt wieder zuschaltenden ersten Kupplung K1 negativ in Form eines Schaltrucks bemerkbar. Zum Zeitpunkt t8 wird sodann die elektronische Getriebesteuerung den Hochschaltbefehl ausgeben. Hierdurch ändert sich in Fig. 3B der Signalverlauf von Null nach Eins. Im Zeitraum t5 bis t8 läuft die zuvor beschriebene Sperrzeit. Zum Zeitpunkt t8 wird die erste Kupplung bis zum Zeitpunkt t9, gemäß Fig. 3D, mit Schnellfülldruck beaufschlagt. Zeitgleich wird die zweite Kupplung K2 abgeschaltet, so daß das Druckniveau vom Punkt T sich auf das Druckniveau vom Punkt U verringert. Wie aus Fig. 3A ersichtlich ist, ist der DKI-Wert immer noch bei Null, d. h., die Hochschaltung wird als Schub-Hochschaltung ausgeführt. Im Zeitraum t9 bis t10 läuft für die erste Kupplung die Füllausgleichsphase, gefolgt von einer Rampe und vom Übergang auf Normaldruck, Punkt N. Im Zeitpunkt t11 hat die Getriebeeingangsdrehzahl nT den Synchronpunkt nT(i1) der ersten Übersetzungsstufe i1, entsprechend Fig. 3C Punkt E, erreicht. Die Hochschaltung ist somit beendet.

Das zweite Beispiel zeigt eine Lösung gemäß der Erfindung. Der Kurvenverlauf im Zeitraum t1 bis t3 ist hierbei mit dem ersten Beispiel identisch. Zum Zeitpunkt t3 gibt die elektronische Getriebesteuerung den Rückschaltbefehl aus. In Fig. 3B ändert sich der Signalpegel von Null nach Eins. Als Folge hiervon wird das Druckniveau der ersten Kupplung pK1 vom Druckniveau des Punktes I auf das Druckniveau des Punktes O verringert. Das Druckniveau der zweiten Kupplung pK2 wird ebenfalls zum Zeitpunkt t3 vom Niveau des Punktes R auf das Druckniveau des Punktes V verringert. Aufgrund des freigegebenen Fahrpedals und der geöffneten Kupplungen wird sich die Getriebeeingangdrehzahl nT gemäß dem Kurvenzug BF verändern, d. h., die Brennkraftmaschine läuft lastlos hoch. Im Punkt F wird die Getriebeeingangsdrehzahl nT ihren Maximalwert erreichen. Zum Zeitpunkt t6 wird das Druckniveau der ersten Kupplung im Punkt O bis zum Zeitpunkt t7 rampenförmig erhöht. Zum Zeitpunkt t7 wird das Druckniveau der ersten Kupplung entsprechend dem Druckniveau des Punktes P erhöht, so daß die erste Kupplung K1 am Synchronpunkt nT(i1) der ersten Übersetzungsstufe i1 die Last sicher übernehmen kann. Der Synchronpunkt entspricht hierbei dem Punkt G in Fig. 3C. Die Schaltung ist bei t7 beendet.

Die erfindungsgemäße Lösung bietet somit gegenüber dem Stand der Technik den Vorteil, daß die Zug-Rückschaltung und anschließende Schub-Hochschaltung bereits vor dem Zeitpunkt t11, nämlich zum Zeitpunkt t7, beendet ist. Der Zeitraum t7 bis t11 ist somit als Zeitvorteil gegenüber dem Stand der Technik zu sehen. Da die Reaktion des Automatgetriebes auf den Leistungswunsch des Fahrers zu einem früheren Zeitpunkt erfolgt, wirkt das Automatgetriebe spontaner.

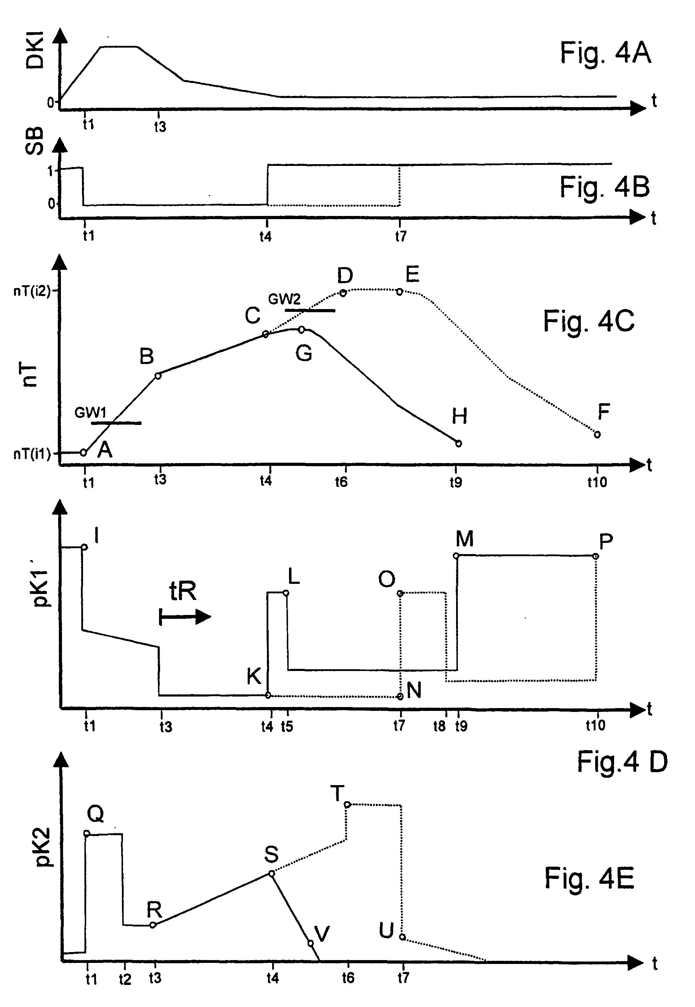

In Fig. 4, bestehend aus den Teil-Fig. 4A bis 4E, ist eine zweite Schaltung dargestellt, bestehend aus einer Zug-Rückschaltung, gefolgt von einer Schub-Rückschaltung und einer Schub-Hochschaltung. Ein Anwendungsfall aus der Praxis ist, wenn ein Fahrer hinter einem Fahrzeug herfährt und der von ihm eingestellte Fahrpedalwert sich nahe der Zug-/Schub-Kennlinie als auch einer Rückschalt-Kennlinie befindet. In diesem Fall führt bereits eine geringe Vergrößerung der Fahrpedalstellung zu einer Rückschaltung bzw. eine leichte Freigabe zu einer Änderung der Schaltungsart von einer Zug-Rückschaltung in eine Schub-Rückschaltung. Dargestellt sind wiederum ein Kurvenverlauf gemäß dem Stand der Technik (gestrichelte Linie) und ein Kurvenverlauf gemäß der Erfindung (durchgezogene Linie). In Fig. 4C zeigt der Kurvenverlauf mit den Punkten A, B, C, D, E und F einen Verlauf gemäß dem Stand der Technik. In Fig. 4D zeigt der Kurvenverlauf mit den Punkten I, N, O und P ebenfalls einen Verlauf gemäß dem Stand der Technik. In Fig. 4E zeigt der Kurvenverlauf mit den Punkten Q, R, S, T und U ebenfalls einen Verlauf gemäß dem Stand der Technik. In Fig. 4C zeigt der Kurvenverlauf mit den Punkten A, B, C, G und H einen Verlauf gemäß der Erfindung. In Fig. 4D zeigt der Kurvenverlauf mit den Punkten I, K, L, M und P einen Verlauf gemäß der Erfindung. In Fig. 4E zeigt der Kurvenverlauf mit den Punkten Q, R, S und V ebenfalls einen Verlauf gemäß der Erfindung.

Im ersten Beispiel wird der Verlauf gemäß dem Stand der Technik beschrieben:
Zum Zeitpunkt t1 übersteigt der DKI-Wert den Wert einer Rückschaltkennlinie. Dadurch wird die elektronische Getriebesteuerung einen Rückschaltbefehl ausgeben, in Fig. 4B ist dies dargestellt, indem sich der Pegel des Signals SB von Eins nach Null verändert. Ebenfalls zum Zeitpunkt t1 wird die erste Kupplung K1 von einem ersten Druckniveau, entsprechend dem Punkt I, auf ein zweites Druckniveau verringert. Zum Zeitpunkt t1 bis zum Zeitpunkt t2 wird die zweite Kupplung K2 mit dem Schnellfülldruck, Druckniveau entsprechend dem Punkt Q, beaufschlagt. Im Zeitraum t2 bis t3 läuft für die zweite Kupplung K2 die Füllausgleichsphase. Zum Zeitpunkt t3 wird nun davon ausgegangen, da sich der DKI-Wert so stark verringert hat, sich die Schaltungsart ändert, d. h. zum Zeitpunkt t3 wird aus der Zug-Rückschaltung eine Schub-Rückschaltung. Im Zeitpunkt t3 wird die erste Kupplung K1 abgeschaltet. Zeitgleich beginnt für die zweite Kupplung K2 eine Druckrampe im Punkt R. Diese Druckrampe läuft bis zum Zeitpunkt t6. Danach wird das Druckniveau auf das des Punktes T erhöht. Zum Zeitpunkt t4 wird nunmehr davon ausgegangen, daß der DKI-Wert eine Hochschaltkennlinie überschreitet. Gemäß dem Stand der Technik wird jedoch zuerst die Rückschaltung vollständig ausgeführt, d. h., die Getriebeeingangsdrehzahl wird sich weiterhin vergrößern, bis sie zum Zeitpunkt t6 den Synchronpunkt nT(i2) der zweiten Übersetzungsstufe erreicht. Zum Zeitpunkt t6 wird dann das Druckniveau der zweiten Kupplung pK2 auf das Druckniveau entsprechend Punkt T erhöht. Danach folgt eine Sperrzeit bis zum Zeitpunkt t7. Zum Zeitpunkt t7 wird die erste Kupplung bis zum Zeitraum t8 mit Schnellfülldruck beaufschlagt, gefolgt von der Füllausgleichsphase bis zum Zeitpunkt t10. Ebenfalls zum Zeitpunkt t7 wird das Druckniveau der zweiten Kupplung pK2 vom Druckniveau des Punktes T sehr stark verringert, entsprechend dem Druckniveau des Punktes U. Da sich der DKI-Wert bei etwa Null befindet, wird sich als Folge hiervon die Getriebeeingangsdrehzahl nT verkleinern. Zum Zeitpunkt t10 wird das Druckniveau der ersten Kupplung pK1 auf das Niveau entsprechend dem Punkt P erhöht, so daß diese die Motorlast den Synchronpunkt der ersten Übersetzungsstufe übernimmt. Diese Druckerhöhung kann auch als Rampe ausgeführt sein.

Im zweiten Beispiel wird der Verlauf gemäß der Erfindung beschrieben:
Während des Zeitraumes t1 bis t4 sind die Verläufe entsprechend, wie zuvor beschrieben. Zum Zeitpunkt t4, also wenn die elektronische Getriebesteuerung den Hochschaltbefehl ausgibt, wird die erste Kupplung bis zum Zeitraum t5 mit dem Schnellfülldruck beaufschlagt. In Fig. 4B ändert sich der Signalpegel SB von Null nach Eins. Zeitgleich wird das Druckniveau der zweiten Kupplung rampenförmig vom Punkt S zum Punkt V reduziert. Aufgrund des lastlosen Zustandes wird sich sodann die Getriebeeingangsdrehzahl nT nicht mehr so stark erhöhen. Im Punkt G erreicht sie ihren Maximalwert. Im Zeitraum t5 bis t9 läuft die Füllausgleichsphase der ersten Kupplung. Im Zeitpunkt t9 wird das Druckniveau der ersten Kupplung auf ein Druckniveau entsprechend dem Punkt M vergrößert, da die Getriebeeingangsdrehzahl nT den Synchronpunkt nT(i1) der ersten Übersetzungsstufe im Punkt H erreicht hat.

Zum Zeitpunkt t3 wird eine Zeistufe tR gestartet, siehe Fig. 4D. Diese Zeitstufe läuft bis zu einer maximalen Zeit, wobei jedem Wert der Zeitstufe eine Reduktionszeit zugeordnet ist. Die Schnellfüllzeit, Zeitraum t4 bis t5, der bei der Hochschaltung jetzt wieder zuschaltenden ersten Kupplung K1 wird in Abhängigkeit dieser Reduktionszeit verändert.
Hierdurch wird dem Umstand Rechnung getragen, daß bei einer schnellen Abfolge einer Rückschaltung mit anschließender Hochschaltung die abschaltende bzw. bei der Hochschaltung wieder zuschaltende erste Kupplung K1 noch teilweise gefüllt ist. Über die variable Schnellfüllzeit wird somit erreicht, daß die eben nur teilweise entleerte Kupplung bei der Hochschaltung ohne Schaltruck komfortabel schließt.

Die erfindungsgemäße Lösung bietet den Vorteil, daß die Zug-Rückschaltung gefolgt von der Schub-Rückschaltung und anschließender Schub-Hochschaltung vor dem Zeitpunkt t10, nämlich zum Zeitpunkt t9, beendet ist. Gegenüber dem Stand der Technik ergibt sich somit als Zeitvorteil der Zeitraum t9 bis t10. Da hier eine engere Anbindung des Getriebeverhaltens an den Leistungswunsch des Fahrers erzielt wird, wirkt das Getriebe dadurch spontaner.

Bei den beiden erfindungsgemäßen Ausführungen in Fig. 3 und 4 wurde von folgenden zusätzlichen Randbedingungen ausgegangen:
1. Der Verlauf des Gradienten der Getriebeeingangsdrehzahl nT liegt innerhalb eines vorgegebenen Drehzahlbandes.
2. Beim Erkennen des Abbruchkriteriums, dies entspricht dem DKI-Wert zum Zeitpunkt t3, befindet sich der aktuelle Getriebeeingangsdrehzahlwert nT innerhalb eines vorgegebenen Drehzahlbereiches. Der Drehzahlbereich wird durch einen ersten (GW1) und einen zweiten (GW2) Grenzwert definiert. Der erste Grenzwert (GW1) ist hierbei eine Funktion des Synchrondrehzahlwertes der ersten Übersetzungsstufe. Der zweite Grenzwert (GW2) ist eine Funktion des Synchrondrehzahlwertes der zweiten Übersetzungsstufe. Diese beiden Grenzwerte können z. B. gemäß der folgenden Beziehung berechnet sein:
   - GW1:: nT(i1) + Offset
   - GW2:: nT(i2) - Offset
   - GW1:: erster Grenzwert
   - GW2:: zweiter Grenzwert
   - nT(i1):: Synchrondrehzahlwert der ersten Übersetzungsstufe
   - nT(i2):: Synchrondrehzahlwert der zweiten Übersetzungsstufe
   - Offset:: absoluter Drehzahlwert, z. B. 200 1/min, oder relativ zur Differenz nT(i2) - nT(i1)

### Bezugszeichen

- 1: Antriebseinheit
- 2: Antriebswelle
- 3: hydrodynamischer Wandler
- 4: Pumpenrad
- 5: Turbinenrad
- 6: Leitrad
- 7: Wandlerkupplung
- 8: Turbinenwelle
- 9: Ravigneaux-Satz
- 10: Freilauf FL1
- 11: Planetenradsatz
- 12: Getriebeausgangswelle
- 13: elektronische Getriebesteuerung
- 14: Micro-Controller
- 15: Speicher
- 16: Funktionsblock Steuerung Stellglieder
- 17: Funktionsblock Berechnung
- 18: Turbinendrehzahl-Signal
- 19: Getriebeausgangsdrehzahl-Signal
- 20: Eingangsgrößen
- 21: hydraulisches Steuergerät

## Patentansprüche

1. Verfahren zur Durchführung von Überschneidungsschaltungen bei einem elektro-hydraulisch gesteuerten Automatgetriebe, bei dem während einer Schaltung eine erste Kupplung (K1) öffnet und eine zweite Kupplung (K2) schließt, wobei bei Erkennen eines Abbruchkriteriums, die einer von einem Fahrer vorgebbaren Hochschaltanforderung entspricht, die Rückschaltung abgebrochen und in die erste (i1) Übersetzungsstufe zurückgekehrt wird, **dadurch gekennzeichnet, daß** zur Erhöhung der Spontanität des Automatgetriebes die Rückschaltung ohne zeitliche Verzögerung eingeleitet wird und die eingeleitete Rückschaltung bei Vorliegen des Abbruchkriteriums verzögerungsfrei abgebrochen und verzögerungsfrei in die erste (i1) Übersetzung zurückgekehrt wird.

2. Verfahren nach Anspruch 1, **dadurch gekennzeichnet, daß** während der Rückschaltung von der ersten (i1) in die zweite (i2) Übersetzungsstufe bei Erfülltsein des Abbruchkriteriums zusätzlich eine Zulässigkeit geprüft wird, die Zulässigkeit dann erfüllt ist, wenn ein aktueller Getriebeeingangsdrehzahlwert (nT(t)) innerhalb eines Drehzahlbereiches mit einem ersten (GW1) und einem zweiten (GW2) Grenzwert (GW1 < nT(t) < GW2) liegt, wobei der erste Grenzwert (GW1) eine Funktion des Synchrondrehzahlwertes der ersten Übersetzungsstufe (GW1 = f(nT(i1)) darstellt bzw, der zweite Grenzwert eine Funktion des Synchrondrehzahlwertes der zweiten Übersetzungsstufe (GW2 = f (nT(i2)) darstellt.

3. Verfahren nach Anspruch 2, **dadurch gekennzeichnet, daß** zusätzlich geprüft wird, ob der Verlauf des Gradienten der Getriebeingangsdrehzahl (nT(Grad)) innerhalb eines vorgegebenen Drehzahlbandes liegt.

4. Verfahren nach Anspruch 1, 2 oder 3, **dadurch gekennzeichnet, daß** bei Ausgabe des Abschaltbefehls für die erste Kupplung (K1) eine Zeitstufe (tR) gestartet wird, die bis zu einer maximalen Zeit (tMAX) läuft, wobei jedem Wert der Zeitstufe (tR) eine Reduktionszeit zugeordnet ist.

5. Verfahren nach Anspruch 4, **dadurch gekennzeichnet, daß** eine Schnellfüllzeit (tSF) der bei der Hochschaltung jetzt wieder zuschaltenden ersten Kupplung (K1) in Abhängigkeit der Reduktionszeit verändert wird.

6. Verfahren nach Anspruch 5, **dadurch gekennzeichnet, daß** die Schnellfüllzeit (tSF) sich in dem Sinne verändert, daß ein kleiner Wert der Zeitstufe (tR) eine kurze Schnellfüllzeit (tSF) bewirkt.

## Claims

1. Method for the realization of overlapping gearshifts in an electro-hydraulically controlled automatic transmission, in which during a gearshift a first clutch (K1) opens and a second clutch (K2) closes, whereby recognition of an abort criterion, which corresponds to an upshift request by the driver, causes interruption of the downshift and return to the first gear ratio(i1),
**characterized in that** for increased spontaneity of the automatic transmission, the downshift is initiated without time delay and the initiated downshift is interrupted without time delay in case of an abort criterion and the return to the first gear ratio(i1)is effected without any time delay.

2. Method according to claim 1,
**characterized in that** during the downshift from the first (i1) to the second ratio(i2),permissibility is additionally checked when an abort criterion is present. Permissibility is present if a current transmission input speed value (nT(t)) is within a speed range with a first (GW1) and a second (GW2) limit value (GW1 < nT(t) < GW2), whereby the first limit value (GW1) represents a function of the synchronous speed value of the first ratio (GW1 =f(nT(i1))and the second limit value represents the function of the synchronous speed value of the second ratio (GW2 = f (nT (i2)).

3. Method according to claim 2,
**characterized in that** an additional check is carried out as to whether the gradient of the transmission input speed (nT(Grad)) remains within a specified speed range.

4. Method according to claims 1, 2 or 3,
**characterized in that** when the shutoff command for the first clutch (K1)is issued, a time stage (tR) is initiated, which runs for a maximum time (tMAX), whereby a reduction time is assigned to each time stage value(tR).

5. Method according to claim 4,
**characterized in that** a rapid fill time (tSF) of the engaging first clutch(K1) is modified in relation to the reduction time.

6. Method according to claim 5,
**characterized in that** the rapid fill time (tSF) changes in the sense that a small value of the time stage(tR) effects a short rapid fill time(tSF).

## Revendications

1. Procédé pour l'exécution de commutations avec chevauchement dans une transmission automatique à commande électro-hydraulique, dans lequel, pendant une commutation, un premier embrayage (K1) s'ouvre et un deuxième embrayage (K2) se ferme, et où, lors de la détection d'un critère d'interruption, qui correspond à une demande de commutation en montée qui peut être prescrite par le conducteur, la rétrogradation est interrompue et on revient au premier palier de rapport (i1), **caractérisé en ce que**, pour améliorer la spontanéité de la transmission automatique, la rétrogradation est enclenchée sans retard de temps et, en réponse à la présence du critère d'interruption, la rétrogradation enclenchée est interrompue sans retard de temps et on revient sans retard de temps au premier palier de rapport (i1).

2. Procédé selon la revendication 1, **caractérisé en ce que**, pendant la rétrogradation du premier (i1) au deuxième (i2) palier de rapport, si le critère d'interruption est satisfait, une fiabilité est en outre vérifiée, la fiabilité étant satisfaite si une valeur actuelle de la vitesse de rotation d'entrée de la transmission (nT(t)) se trouve dans une plage de vitesses de rotation qui comporte une première valeur limite (GW1) et une deuxième valeur limite (GW2), (GW1 < nT(t) < GW2), la première valeur limite (GW1) représentant une fonction de la valeur de vitesse de rotation synchrone du premier palier de rapport (GW1 = f(nT(i1)) et la deuxième valeur limite représentant une fonction de la valeur de la vitesse de rotation synchrone du deuxième niveau de rapport (GW2 = f(nT(i2)).

3. Procédé selon la revendication 2, **caractérisé en ce qu'**on vérifie en outre si l'allure de variation du gradient de la vitesse de rotation d'entrée de la transmission (nT (Grad)) se trouve dans une bande de vitesses de rotation déterminée.

4. Procédé selon la revendication 1, 2 ou 3, **caractérisé en ce que**, lors de l'émission de l'ordre de débrayage pour le premier embrayage (K1), on fait démarrer un laps de temps (tR) qui court jusqu'à un temps maximal (tMAX), un temps de réduction étant associé à chaque valeur du laps de temps (tR).

5. Procédé selon la revendication 4, **caractérisé en ce qu'**un temps de remplissage rapide (tSF) du premier embrayage (K1), qui doit maintenant être de nouveau fermé lors de la commutation en montée, est modifié en fonction du temps de réduction.

6. Procédé selon la revendication 5, **caractérisé en ce que** le temps de remplissage rapide (tSF) se modifie dans le sens tel qu'une petite valeur du laps de temps (tR) détermine un court temps de remplissage rapide (tSF).
